# EUROPÄISCHE PATENTSCHRIFT

(11) **EP 1 453 171 B1**
(45) Veröffentlichungstag und Bekanntmachung des Hinweises auf die Patenterteilung: **07.01.2009**
(21) Anmeldenummer: 03004457.2
(22) Anmeldetag: 27.02.2003
(51) Int. Cl.: H02H 3/20, H02H 11/00

(54) **Elektronische Schutzschaltung**
Electronic protection circuit
Circuit électronique de protection

(43) Veröffentlichungstag der Anmeldung: 01.09.2004
(73) Patentinhaber: Delphi Technologies, Inc., Troy, MI 48007 (US)
(72) Erfinder: Hirsch, Krystian, 42489 Wülfrath (DE)
(74) Vertreter: Denton, Michael John

(56) Entgegenhaltungen:
- EP-A- 0 349 836
- EP-A- 1 128 515
- DE-A- 10 010 544
- GB-A- 2 302 624
- US-A- 3 571 608
- US-A- 4 020 395
- US-A- 5 410 441
- US-A1- 2002 130 643
- US-B1- 6 437 462

## Beschreibung

Die Erfindung betrifft eine elektronische Schutzschaltung der im Oberbegriff des Anspruchs 1 angegebenen Art. Eine solche Schutzschaltung ist in der US-B1-6 437 462 beschrieben.

Die Einführung eines neuen 42 V-Standards für Fahrzeug-Bordnetze bringt für die Bordnetz-Schutzsysteme eine Reihe neuer Probleme mit sich. Da das 42 V-Bordnetz die etablierte 14 V-Technologie nicht sofort durchgehend ersetzen kann, ist in einer Übergangsphase mit einem Zweispannungs-Bordnetz zu rechnen. Insbesondere für diese Phase, aber auch für andere Situationen, in denen Kurzschlüsse zwischen verschiedenen Spannungsniveaus auftreten können, besteht daher ein Bedarf für entsprechende Schutzmittel.

Der Einsatz von Mosfet-Schaltern auf der Seite höheren Potentials zur Steuerung oder Regelung von Lasten und Aktuatoren in Fahrzeugsystemen hat sich in vielerlei Hinsicht bewährt. Tritt nun aber beispielsweise ein Kurzschluss zwischen einer bei 42 V betriebenen Last und einer bei 14 V betriebenen Last auf, so kann sich dieser Fehler über die interne Inversdiode des jeweiligen, auf der Seite höheren Potentials vorgesehenen Mosfet-Lastschalters durch das ganze 14 V-Netz ausbreiten, wodurch eine größere Anzahl von elektrischen bzw. elektronischen Komponenten gefährdet ist. Während die durch ihre auf der Seite höheren Potentials vorgesehenen Lastschalter abgeschirmten 14 V-Lasten und -Aktuatoren durch ein Abschalten.dieser Lastschalter nach einer jeweils festgestellten Überspannung geschützt werden können, bleibt der Eingang des betreffenden Lastreglers oder Steuergeräts ungeschützt. Hinzu kommt, dass die bisher verwendeten Schutzeinrichtungen wie insbesondere Schmelzsicherungen, Stromkreisunterbrecher oder Dioden bestimmte Nachteile mit sich bringen. So führen einige davon zu einer einmaligen Auslösung, während andere durch die in Fahrzeug-Versorgungsnetzen unvermeidlichen Überspannungsausgleichsvorgänge, zum Beispiel im Fall des Schaltens einer induktiven Last, unbeabsichtigt aktiviert werden können.

In der US-B1-6 437 462 ist eine in einem Zweispannungs-DC/DC-Wandlersystem integrierte elektronische Schutzschaltung beschrieben, bei der zwei in Reihe geschaltete, jeweils durch einen FET gebildete Leistungsschalter entweder über ihre Source-Anschlüsse oder über ihre Drain-Anschlüsse miteinander verbunden und über getrennte oder einen gemeinsamen Treiber so angesteuert sind, dass bei einer Fehlfunktion des DC/DC-Wandlersystems ein Stromfluss durch den Wandler verhindert und die beiden Spannungsquellen automatisch voneinander getrennt werden. Dabei ist durch die gegensinnige Polung der internen Inversdioden der beiden FETs sichergestellt, dass im ausgeschalteten Zustand jeglicher Stromfluss durch den Wandler verhindert wird. Im fehlerfreien Betrieb können die beiden Leistungsschalter zur bidirektionalen Laststeuerung und Welligkeitsunterdrückung in dem DC/DC-Wandlersystem herangezogen werden, indem deren Impedanz entsprechend selektiv variiert wird.

Der Erfindung liegt nun die Aufgabe zugrunde, eine verbesserte elektronische Schutzschaltung der eingangs genannten Art zu schaffen, bei der die zuvor genannten, im Zusammenhang mit Mehrspannungsnetzen auftretenden Probleme zumindest reduziert sind. Dabei soll unter anderem ein verbesserter Schutz gegen Kurzschlüsse und insbesondere gegen solche Kurzschlüsse sichergestellt sein, die zwischen bei unterschiedlichen Spannungsniveaus arbeitenden elektrischen und/oder elektronischen Komponenten auftreten können.

Diese Aufgabe wird erfindungsgemäß dadurch gelöst, dass bei abgeschaltetem Mosfet über den Spannungsversorgungseingang und die interne Inversdiode des Mosfets weiterhin eine Spannungsversorgung des betreffenden Netzabschnitts relativ geringeren Spannungsniveaus erfolgt, während durch dieselbe Inversdiode der Spannungsversorgungseingang gegen eine jeweilige Überspannung geschützt ist.

Die elektronische Schutzschaltung ist also so ausgelegt, dass bei abgeschaltetem Mosfet über den Spannungsversorgungseingang und die interne Inversdiode des Mosfets zwar weiterhin eine Spannungsversorgung des betreffenden Netzabschnitts relativ geringeren Spannungsniveaus möglich ist, durch dieselbe Inversdiode der Spannungsversorgungseingang jedoch gegen eine jeweilige Überspannung geschützt ist.

Nachdem also nach einer jeweiligen Abschaltung des Mosfets durch dessen interne Inversdiode der Spannungsversorgungseingang des betreffenden Netzabschnitts relativ geringeren Spannungsniveaus gegen eine jeweilige Überspannung geschützt ist, ist auch ausgeschlossen, dass mit diesem Spannungsversorgungseingang eventuell noch verbundene weitere elektrische und/oder elektronische Komponenten durch die Überspannung gefährdet werden. Es wird über den durch die Verwendung herkömmlicher Sicherungselemente wie beispielsweise Schmelzsicherungen oder Stromkreisunterbrecher ermöglichten Schutz hinaus ein zusätzlicher Schutz für die betreffenden elektrischen bzw. elektronischen Komponenten des jeweiligen Mehrspannungssystems erreicht. Dabei kann es sich bei dem betreffenden Mehrspannungssystem allgemein um ein Spannungsversorgungs- und/oder Kommunikations- bzw. Signalverteilungssystem handeln. Mit der erfindungsgemäßen elektronischen Schutzschaltung wird somit nicht nur eine bei den bisherigen Sicherungssystemen vorhandene Lücke geschlossen, es wird auch eine Reihe von Nachteilen der bisher verwendeten Sicherungselemente, wie zum Beispiel Schmelzsicherungen, Stromkreisunterbrecher oder Dioden, vermieden. Die betreffende Mosfet-Schutzschaltung kann insbesondere als zusätzliches Schutzelement in einem jeweiligen Mehrspannungsnetz eingesetzt werden.

Als Mosfet ist vorzugsweise ein n-Kanal-Mosfet vorgesehen. Es kann sich insbesondere um einen selbstsperrenden Mosfet handeln.

Der Mosfet des erfindungsgemäßen Mosfet-Schutzschaltung ist vorteilhafterweise über einen Überspannungssensor abschaltbar.

Bei einer zweckmäßigen praktischen Ausführungsform der erfindungsgemäßen elektronischen Schutzschaltung ist der Mosfet über einen Treiber so ansteuerbar, dass er bei fehlender Überspannung eingeschaltet ist. Vorzugsweise ist der Treiber über den Überspannungssensor so ansteuerbar, dass der Mosfet bei Auftreten einer jeweiligen Überspannung abgeschaltet wird.

Bei einer bevorzugten praktischen Ausführungsform der erfindungsgemäßen elektronischen Schutzschaltung ist der Treiber durch eine von einem Netzabschnitt relativ höheren Spannungsniveaus abgeleitete Spannung gespeist. Dabei kann der Treiber beispielsweise durch eine an einem Spannungsversorgungseingang eines Netzabschnitts relativ höheren Spannungsniveaus anliegende Spannung gespeist sein.

Von Vorteil ist insbesondere auch, wenn dem Netzabschnitt relativ geringeren Spannungsniveaus ein Überspannungsableiter zugeordnet ist. Ein solcher Überspannungsableiter ist zweckmäßigerweise dem Mosfet-Schutzschalter nachgeschaltet.

Der Mosfet-Schutzschalter ist vorzugsweise im Bereich des Spannungsversorgungseingangs des Netzabschnitts relativ geringeren Spannungsniveaus angeordnet. Damit ist der Spannungsversorgungseingang praktisch gegen sämtliche im betreffenden Netzabschnitt relativ geringeren Spannungsniveaus auftretende Überspannungen bzw. Kurzschlüsse geschützt.

Bei einer zweckmäßigen praktischen Ausführungsform der erfindungsgemäßen elektronischen Schutzschaltung ist der Mosfet-Schutzschalter zwischen den Spannungsversorgungseingang und eine interne Spannungsversorgungsschiene des Netzabschnitts relativ geringeren Spannungsniveaus geschaltet. Damit ist der Spannungsversorgungseingang gegen sämtliche im Bereich der an die interne Spannungsversorgungsschiene angeschlossenen elektrischen bzw. elektronischen Komponenten auftretende Überspannungen geschützt.

Der Überspannungsableiter kann insbesondere an die interne Spannungsversorgungsschiene angeschlossen sein. Sobald im Bereich eines der an diese Spannungsversorgungsschiene angeschlossenen elektrischen bzw. elektronischen Komponenten eine Überspannung auftritt, wird diese also durch den Überspannungsableiter entsprechend reduziert. Ein solcher Überspannungsableiter ist allerdings nicht zwingend.

Bei einer zweckmäßigen praktischen Ausführungsform wird über den Netzabschnitt relativ geringeren Spannungsniveaus wenigstens eine Last mit elektrischer Energie versorgt. Dabei kann zwischen den Mosfet-Schutzschalter und eine jeweilige, dem Netzabschnitt relativ geringeren Spannungsniveaus zugeordnete Last wenigstens ein Lastschalter geschaltet sein. Als Lastschalter kann insbesondere wieder ein Mosfet mit interner Inversdiode vorgesehen sein. In diesem Fall arbeitet der Mosfet jedoch im normalen Betriebsmodus. Der Lastschalter kann insbesondere über einen Lastregler, ein Steuergerät und/oder dergleichen ansteuerbar sein.

Auch über den Netzabschnitt relativ höheren Spannungsniveaus kann wieder wenigstens eine Last mit elektrischer Energie versorgt werden. Auch in diesem Fall kann einer jeweiligen, dem Netzabschnitt relativ höheren Spannungsniveaus zugeordneten Last wieder wenigstens ein Lastschalter vorgeschaltet sein. Der Lastschalter kann beispielsweise wieder ein Mosfet mit interner Inversdiode umfassen. Der Mosfet arbeitet auch hier wieder im normalen Betriebsmodus. Der Lastschalter kann insbesondere wieder über einen Lastregler, ein Steuergerät und/oder dergleichen ansteuerbar sein.

Der mit dem Mosfet-Schutzschalter versehene Netzabschnitt relativ geringeren Spannungsniveaus und der jeweilige Netzabschnitt relativ höheren Spannungsniveaus kann beispielsweise auch Teil eines übergeordneten Lastreglers, Steuergeräts und/oder dergleichen sein.

Bei einer bevorzugten praktischen Ausführungsform ist das bei unterschiedlichen Gleichspannungsniveaus betriebene Netz durch ein Mehrspannungs-Bordnetz und insbesondere durch ein Zweispannungs-Bordnetz eines Fahrzeugs, insbesondere Kraftfahrzeugs gebildet. Dabei kann das bei unterschiedlichen Gleichspannungsniveaus betriebene Netz beispielsweise durch ein 14 V/42 V-Bordnetz gebildet sein.

Die Erfindung wird im Folgenden anhand eines Ausführungsbeispiels unter Bezugnahme auf die Zeichnung näher erläutert; in dieser zeigen:
- Figur 1: ein Prinzipschaltbild einer beispielhaften Ausführungsform einer elektronischen Schutzschaltung für ein Zweispannungs-Bordnetz eines Kraftfahrzeugs und
- Figur 2: eine vergrößerte, detailliertere Darstellung des Mosfet-Schutzschalters der in der Figur 1 gezeigten Schutzschaltung.

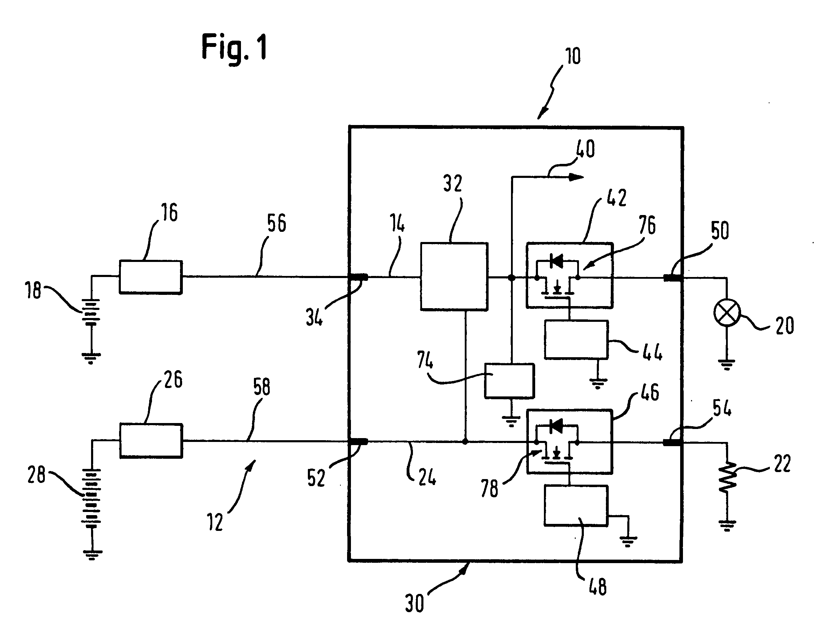

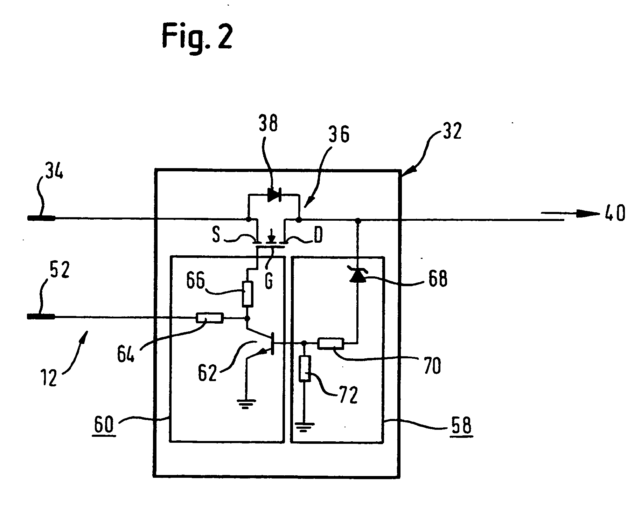

Die Figuren 1 und 2 zeigen in rein schematischer Darstellung eine elektronische Schutzschaltung 10 für ein bei unterschiedlichen Gleichspannungsniveaus betriebenes Netz, hier beispielsweise ein Zweispannungs-Bordnetz 12 eines Fahrzeugs, insbesondere Kraftfahrzeugs. Bei dem Zweispannungs-Bordnetz 12 kann es sich beispielsweise um ein 14 V/42 V-Bordnetz handeln. Ein solches Bordnetz umfasst in der Regel mehrere elektrische und/oder elektronische Komponenten.

Über einen Netzabschnitt 14 relativ geringeren Spannungsniveaus, der im vorliegenden Fall über einen herkömmlichen Sicherungskasten 16 z.B. an eine 14 V-Batterie 18 angeschlossen ist, wird eine Last 20 mit elektrischer Energie versorgt.

Eine weitere Last 22 wird über einen Netzabschnitt 24 relativ höheren Spannungsniveaus mit Energie versorgt, der über einen herkömmlichen Sicherungskasten 26 hier beispielsweise an eine 42 V-Batterie 28 angeschlossen ist.

Der Netzabschnitt 14 relativ geringeren Spannungsniveaus und der Netzabschnitt 24 relativ höheren Spannungsniveaus können beispielsweise Teil eines übergeordneten Lastreglers 30, Steuergeräts und/oder dergleichen sein.

Dem Netzabschnitt 14 relativ geringeren Spannungsniveaus ist ein Mosfet-Schutzschalter 32 zugeordnet, der als zusätzliches Schutzelement bzw. zusätzliche Schutzeinheit in dem Zweispannungs-Bordnetz 12 eingesetzt und in dieses beispielsweise auch nachträglich noch eingebaut werden kann. Wie anhand der Figur 1 zu erkennen ist, ist der dem Netzabschnitt 14 relativ geringeren Spannungsniveaus zugeordnete Mosfet-Schutzschalter 32 einem Spannungsversorgungseingang 34 des Netzabschnitts 14 nachgeschaltet.

Gemäß Figur 2 umfasst der Mosfet-Schutzschalter 32 einen im umgekehrten Betriebsmodes arbeitenden Mosfet 36 mit interner Inversdiode 38. Bei dem Mosfet 36 (metal oxide semiconductor fet; fet = Feldeffekttransistor) kann es sich insbesondere um einen n-Kanal-Mosfet handeln. Dieser n-Kanal-Mosfet 36 ist vorzugsweise selbstsperrend.

Wie insbesondere anhand der Figur 2 zu erkennen ist, ist der Source-Anschluss S des Mosfets 38 mit dem Spannungsversorgungseingang 34 des Netzabschnitts 14 relativ geringeren Spannungsniveaus verbunden. Am Source-Anschluss S liegt also normalerweise ein höheres Spannungspotential an als am Drain-Anschluss D, was sich daraus ergibt, dass dieser Mosfet 36, wie bereits erwähnt, im umgekehrten Betriebsmodus arbeitet.

Im vorliegenden Fall ist der Mosfet-Schutzschalter 32 zwischen den Spannungsversorgungseingang 34 und eine interne Spannungsversorgungsschiene 40 des Netzabschnitts 14 relativ geringeren Spannungsniveaus geschaltet. Der Drain-Anschluss D des Mosfets 36 ist hier also mit dieser internen Spannungsversorgungsschiene 40 verbunden.

Zwischen den Mosfet-Schutzschalter 32 und die dem Netzabschnitt 14 relativ geringeren Spannungsniveaus zugeordnete Last 20 ist ein Lastschalter 42 geschaltet, der beispielsweise über einen Lastregler 44, ein Steuergerät und/oder dergleichen ansteuerbar ist. Mit der Spannungsversorgungsschiene 40 können weitere auf der Seite höheren Potentials liegende Lastschalter verbunden sein.

Der über den Netzabschnitt 24 relativ höheren Spannungsniveaus mit einer entsprechend höheren elektrischen Energie versorgten Last 22 ist ein Lastschalter 46 vorgeschaltet. Auch dieser dem Netzabschnitt 24 relativ höheren Spannungsniveaus zugeordnete Lastschalter 46 kann beispielsweise wieder über einen Lastregler 48, ein Steuergerät und/oder dergleichen ansteuerbar sein.

Während der Lastschalter 42 zwischen die interne Spannungsversorgungsschiene 40 und den Ausgang 50 des Netzabschnitts 14 relativ geringeren Spannungsniveaus geschaltet ist, ist der Lastschalter 46 direkt mit dem Spannungsversorgungseingang 52 des Netzabschnitts 24 relativ höheren Spannungsniveaus verbunden. Dabei ist dieser Lastschalter 46 zwischen diesen Spannungsversorgungseingang 52 und den Ausgang 54 des Netzabschnitts 24 relativ höheren Spannungsniveaus geschaltet, an die Last 22 angeschlossen ist.

Die Batterie 18 relativ geringer Spannung, hier z.B. eine 14 V-Batterie, ist über eine Eingangsleitung 56 mit dem Spannungsversorgungseingang 14 des Netzabschnitts 14 relativ niedrigeren Spannungsniveaus und die Batterie 28 relativ höherer Spannung, hier z.B. eine 42 V-Batterie, über eine Eingangsleitung 58 mit dem Spannungsversorgungseingang 52 des Netzabschnitts 24 relativ höheren Spannungsniveaus verbunden.

Der im umgekehrten Betriebsmodus arbeitende Mosfet 36 mit interner Inversdiode 38 ist bei Auftreten einer Überspannung im anschließenden Teil des Netzabschnitts 14 relativ geringeren Spannungsniveaus beispielsweise aufgrund eines Kurzschlusses mit einem Netzabschnitt 24 relativ höheren Spannungsniveaus automatisch abschaltbar, um den Spannungsversorgungseingang 34 des Netzabschnitts 14 bzw. Lastreglers 30 oder Steuergeräts gegen die Überspannung zu schützen. Dabei wird der Spannungsversorgungseingang 34 nach Abschalten des Mosfets 36 durch dessen in Sperrrichtung wirkende Inversdiode 38 gegen die jeweilige Überspannung geschützt. Auch bei abgeschaltetem Mosfet 36 ist über den Spannungsversorgungseingang 34 und die interne Inversdiode 38 des Mosfets 36 noch eine Spannungsversorgung des Netzabschnitts 14 relativ geringeren Spannungsniveaus möglich.

Der Mosfet 36 kann beispielsweise über einen Überspannungssensor 58 (vgl. Figur 2) abgeschaltet werden. Im vorliegenden Fall wird über den Überspannungssensor 58 ein den Gate-Anschluss G des Mosfets 36 beaufschlagender Treiber 60 so angesteuert, dass der Mosfet 36 bei Auftreten einer jeweiligen Überspannung abgeschaltet wird.

Über den Treiber 60 ist der Mosfet 36 normalerweise, das heißt bei fehlender Überspannung so ansteuerbar, dass er eingeschaltet ist, das heißt dessen Source-Drain-Strecke leitet. Die interne Inversdiode 38 wird im Normalfall also entsprechend überbrückt, wodurch die im Normalbetrieb auftretenden Verluste entsprechend reduziert werden.

Der Treiber 60 kann beispielsweise durch eine von dem Netzabschnitt 24 relativ höheren Spannungsniveaus abgeleitete Spannung gespeist werden. Im vorliegenden Fall ist der Treiber 60 durch die am Spannungsversorgungseingang 52 des Netzabschnitts 24 relativ höheren Spannungsniveaus bzw. am betreffenden Eingang 52 des Lastreglers 30, Steuergeräts und/oder dergleichen anliegende Spannung gespeist.

Wie anhand der Figur 2 zu erkennen ist, kann der Treiber 60 beispielsweise durch eine einfache Transistorschaltung, hier beispielsweise eine Emitterschaltung, gebildet sein. Im vorliegenden Fall ist der Kollektor des betreffenden Transistors 62 über einen Widerstand 64 mit dem Spannungsversorgungseingang 52 des Lastreglers 30 oder Steuergeräts und über einen Widerstand 66 mit dem Gate-Anschluss G des Mosfets 36 verbunden.

Der Überspannungssensor 58 kann beispielsweise eine mit ihrer Kathode an die Spannungsversorgungsschiene 40 angeschlossene Zenerdiode 68 umfassen, die mit ihrer Anode über einen Widerstand 70 mit der Basis des Transistors 62 verbunden ist, an die überdies ein Widerstand 72 angeschlossen ist, der mit seinem anderen Ende ebenso wie der Emitter des Transistors 62 auf Masse liegt.

Wie anhand der Figur 1 zu erkennen ist, kann dem Netzabschnitt 14 relativ geringeren Spannungsniveaus ein Überspannungsableiter 74 zugeordnet sein. Ein solcher Überspannungsableiter ist jedoch nicht zwingend.

Der Überspannungsableiter 74 ist im vorliegenden Fall z.B. wieder an die interne Spannungsversorgungsschiene 40 angeschlossen und damit dem Mosfet-Schutzschalter 32 nachgeschaltet.

Auch die Lastschalter 42, 46 können jeweils wieder einen Mosfet 76 bzw. 78 mit interner Inversdiode umfassen. Die Mosfets 76, 78 arbeiten hier jedoch im normalen Betriebsmodus, was bedeutet, dass am Drain-Anschluss normalerweise ein höheres Spannungspotential anliegt als am Source-Anschluss.

Der Mosfet-Schutzschalter 32 kann also beispielsweise einen Mosfet 36 mit interner Inversdiode 38, einen Überspannungssensor 58 sowie einen Treiber 60 umfassen und beispielsweise als integriertes Schutzelement vorgesehen sein.

Dieser als Schutzelement dienende Mosfet-Schutzschalter 30 nutzt zum Schutz des Spannungsversorgungseingangs 34 den im umgekehrten Betriebsmodus arbeitenden Mosfet 36 mit interner Inversdiode 38, der mit seiner Drain-Source-Strecke entsprechend in umgekehrter Richtung zwischen den zu schützenden Versorgungsspannungseingang 34 bzw. die zu schützende Eingangsleitung 56 relativ geringeren Spannungsniveaus des Lastreglers oder Steuergeräts 30 und dessen interne, z.B. eine gemeinsame relativ geringere Spannung für mehrere elektrische bzw. elektronische Komponenten liefernde Spannungsversorgungsschiene 40 geschaltet ist.

Mit diesem Mosfet-Schutzschalter 32 ist dafür gesorgt, dass sich eine jeweilige Überspannung nicht über den Versorgungsspannungseingang 34 nach außen ausbreiten kann. Über den in Abhängigkeit von einer auftretenden Überspannung entsprechend ansteuerbaren Treiber 60 wird der normalerweise eingeschaltete Mosfet 36 abgeschaltet, woraufhin der Versorgungsspannungseingang 34 durch die interne Inversdiode 38 gegen eine jeweilige Überspannung geschützt ist. Im normalen Betrieb, das heißt bei fehlender Überspannung, wird die interne Inversdiode 38 durch die durchgeschaltete Source-Drain-Strecke überbrückt, so dass Leistungsverluste, die auch eine leitende Inversdiode 38 noch mit sich bringen würde, entsprechend vermieden werden.

Im Fall eines externen Kurzschlusses, beispielsweise zwischen der ein relativ höheres Spannungsniveau aufweisenden Eingangsleitung 58 und einem der ein relativ niedrigeres Spannungsniveau aufweisenden Ausgänge 50 oder einem Verlust der Masse der Batterie 28 relativ höherer Spannung wird eine relativ höhere Spannung zwar noch über die Inversdiode des Lastschalters 42 nach vorne zur internen Spannungsversorgungsschiene 40 weitergeleitet, sofern diese nicht durch den Ausgang 50 unterdrückt wird. Durch den Mosfet-Schutzschalter 32 wird jedoch der Spannungsversorgungseingang 34 bzw. die Eingangsleitung 56 gegenüber einer jeweiligen Überspannung geschützt.

Dabei wird eine jeweilige Überspannung z.B. an der Spannungsversorgungsschiene 40 durch den Überspannungssensor 58 erfasst. Daraufhin wird der Treiber 60 so angesteuert, dass der normalerweise eingeschaltete Mosfet 36 mit interner Inversdiode 38 abgeschaltet wird. Bei abgeschaltetem Mosfet 36, das heißt bei einem hochohmigen Zustand der betreffenden Source-Drain-Strecke, bleibt die interne Inversdiode 38 in Sperrrichtung gepolt, wodurch ein Weiterleiten der Überspannung über den Spannungsversorgungseingang 34 des Lastreglers 30 bzw. Steuergeräts nach außen verhindert wird. Selbst nach einer Abschaltung des Mosfets 36 ist nach wie vor eine Spannungsversorgung der Spannungsversorgungsschiene 40 über den Spannungsversorgungseingang 34 und die interne Inversdiode 38 möglich. Die innerhalb des Lastreglers 30 bzw. Steuergeräts vorhandene relativ höhere Spannung beispielsweise aus dem Netzabschnitt 24 relativ höheren Spannungsniveaus kann zur Ansteuerung des Mosfets 36 über den Treiber 60 genutzt werden.

Zur Unterdrückung einer jeweiligen Überspannung z.B. an der ein relativ geringeres Spannungspotential aufweisenden internen Spannungsversorgungsschiene 40 kann wahlweise ein Überspannungsableiter 74 eingesetzt werden. Ein solcher Überspannungsableiter 74 ist jedoch nicht zwingend.

Der Ausgang 50 des Netzabschnitts 14 relativ geringeren Spannungsniveaus als solcher kann von dem Mosfet-Schutzschalter 32 nicht profitieren, so dass für dessen Schutz andere bzw. weitere Mittel vorzusehen sind.

### Bezugszeichenliste

- 10: elektronische Schutzschaltung
- 12: Zweispannungs-Bordnetz
- 14: Netzabschnitt relativ geringeren Spannungsniveaus
- 16: Sicherungskasten
- 18: 14 V-Batterie
- 20: Last
- 22: Last
- 24: Netzabschnitt relativ höheren Spannungsniveaus
- 26: Sicherungskasten
- 28: 42 V-Batterie
- 30: Lastregler, Steuergerät
- 32: Mosfet-Schutzschalter
- 34: Spannungsversorgung
- 36: Mosfet
- 38: interne Inversdiode
- 40: Spannungsversorgungsschiene
- 42: Lastschalter
- 44: Lastregler, Steuergerät
- 46: Lastschalter
- 48: Lastregler, Steuergerät
- 50: Ausgang
- 52: Spannungsversorgungseingang
- 54: Ausgang
- 56: Eingangsleitung
- 58: Überspannungssensor
- 60: Treiber
- 62: Transistor
- 64: Widerstand
- 66: Widerstand
- 68: Zenerdiode
- 70: Widerstand
- 72: Widerstand
- 74: Überspannungsableiter
- 76: Mosfet
- 78: Mosfet

- D: Drain-Anschluss
- G: Gate-Anschluss
- S: Source-Anschluss

## Patentansprüche

1. Elektronische Schutzschaltung (10) für ein mehrere elektrische und/oder elektronische Komponenten umfassendes, bei unterschiedlichen Gleichspannungsniveaus betriebenes Netz (12), wobei wenigstens einem Netzabschnitt (14) relativ geringeren Spannungsniveaus ein Mosfet-Schutzschalter (32) zugeordnet ist, der einem Spannungsversorgungseingang (34) des betreffenden Netzabschnitts (14) nachgeschaltet ist und einen im umgekehrten Betriebsmodus arbeitenden Mosfet (36) mit interner Inversdiode (38) umfasst, der bei Auftreten einer Überspannung in einem darauf folgenden Teil des betreffenden Netzabschnitts (14) beispielsweise aufgrund eines Kurzschlusses mit einem Netzabschnitt (24) relativ höheren Spannungsniveaus automatisch abschaltbar ist, um den Spannungsversorgungseingang des Netzabschnitts (14) relativ geringeren Spannungsniveaus gegen die Überspannung zu schützen,
**dadurch gekennzeichnet,**
**dass** bei abgeschaltetem Mosfet (36) über den Spannungsversorgungseingang (34) und die interne Inversdiode (38) des Mosfets (36) weiterhin eine Spannungsversorgung des betreffenden Netzabschnitts (14) relativ geringeren Spannungsniveaus erfolgt, während durch dieselbe Inversdiode (38) der Spannungsversorgungseingang (34) gegen eine jeweilige Überspannung geschützt ist.

2. Elektronische Schutzschaltung nach Anspruch 1,
**dadurch gekennzeichnet,**
**dass** als Mosfet (36) ein n-Kanal-Mosfet vorgesehen ist.

3. Elektronische Schutzschaltung nach Anspruch 1 oder 2,
**dadurch gekennzeichnet,**
**dass** als Mosfet (36) ein selbstsperrender Mosfet vorgesehen ist.

4. Elektronische Schutzschaltung nach einem der vorhergehenden Ansprüche,
**dadurch gekennzeichnet,**
**dass** der Mosfet (36) über einen Überspannungssensor (58) abschaltbar ist.

5. Elektronische Schutzschaltung nach einem der vorhergehenden Ansprüche,
**dadurch gekennzeichnet,**
**dass** der Mosfet (36) über einen Treiber (60) so ansteuerbar ist, dass er bei fehlender Überspannung eingeschaltet ist.

6. Elektronische Schutzschaltung nach Anspruch 4 und 5,
**dadurch gekennzeichnet,**
**dass** der Treiber (60) über den Überspannungssensor (58) so ansteuerbar ist, dass der Mosfet (36) bei Auftreten einer Überspannung abgeschaltet wird.

7. Elektronische Schutzschaltung nach Anspruch 5 oder 6,
**dadurch gekennzeichnet,**
**dass** der Treiber (60) durch eine von einem Netzabschnitt (24) relativ höheren Spannungsniveaus abgeleitete Spannung gespeist ist.

8. Elektronische Schutzschaltung nach Anspruch 7,
**dadurch gekennzeichnet,**
**dass** der Treiber (60) durch eine an einem Spannungsversorgungseingang (52) des Netzabschnitts (24) relativ höheren Spannungsniveaus anliegende Spannung gespeist ist.

9. Elektronische Schutzschaltung nach einem der vorhergehenden Ansprüche,
**dadurch gekennzeichnet,**
**dass** dem Netzabschnitt (14) relativ geringeren Spannungsniveaus ein Überspannungsableiter (74) zugeordnet ist.

10. Elektronische Schutzschaltung nach Anspruch 9,
**dadurch gekennzeichnet,**
**dass** der Überspannungsableiter (74) dem Mosfet-Schutzschalter (32) nachgeschaltet ist.

11. Elektronische Schutzschaltung nach einem der vorhergehenden Ansprüche,
**dadurch gekennzeichnet,**
**dass** der Mosfet-Schutzschalter (32) im Bereich des Spannungsversorgungseingangs (34) des Netzabschnitts (14) relativ geringeren Spannungsniveaus angeordnet ist.

12. Elektronische Schutzschaltung nach einem der vorhergehenden Ansprüche,
**dadurch gekennzeichnet,**
**dass** der Mosfet-Schutzschalter (32) zwischen den Spannungsversorgungseingang (40) und eine interne Spannungsversorgungsschiene des Netzabschnitts (14) relativ geringeren Spannungsniveaus geschaltet ist.

13. Elektronische Schutzschaltung nach Anspruch 12,
**dadurch gekennzeichnet,**
**dass** der Überspannungsableiter (74) an die interne Spannungsversorgungsschiene (40) angeschlossen ist.

14. Elektronische Schutzschaltung nach einem der vorhergehenden Ansprüche,
**dadurch gekennzeichnet,**
**dass** über den Netzabschnitt (14) relativ geringeren Spannungsniveaus wenigstens eine Last (20) mit elektrischer Energie versorgt wird.

15. Elektronische Schutzschaltung nach Anspruch 14,
**dadurch gekennzeichnet,**
**dass** zwischen den Mosfet-Schutzschalter (32) und eine jeweilige, dem Netzabschnitt relativ geringeren Spannungsniveaus zugeordnete Last (20) wenigstens ein Lastschalter (42) geschaltet ist.

16. Elektronische Schutzschaltung nach Anspruch 15,
**dadurch gekennzeichnet,**
**dass** der Lastschalter (42) einen Mosfet (76) mit interner Inversdiode umfasst.

17. Elektronische Schutzschaltung nach Anspruch 15 oder 16,
**dadurch gekennzeichnet,**
**dass** der Lastschalter (42) über einen Lastregler, ein Steuergerät (44) und/oder dergleichen ansteuerbar ist.

18. Elektronische Schutzschaltung nach einem der vorhergehenden Ansprüche,
**dadurch gekennzeichnet,**
**dass** über den Netzabschnitt (24) relativ höheren Spannungsniveaus wenigstens eine Last (22) mit elektrischer Energie versorgt wird.

19. Elektronische Schutzschaltung nach Anspruch 18,
**dadurch gekennzeichnet,**
**dass** einer jeweiligen, dem Netzabschnitt (24) relativ höheren Spannungsniveaus zugeordneten Last (22) wenigstens ein Lastschalter (46) vorgeschaltet ist.

20. Elektronische Schutzschaltung nach Anspruch 19,
**dadurch gekennzeichnet,**
**dass** der Lastschalter (46) einen Mosfet (78) mit interner Inversdiode umfasst.

21. Elektronische Schutzschaltung nach Anspruch 19 oder 20,
**dadurch gekennzeichnet,**
**dass** der Lastschalter (46) über einen Lastregler, ein Steuergerät (48) und/oder dergleichen ansteuerbar ist.

22. Elektronische Schutzschaltung nach einem der vorhergehenden Ansprüche,
**dadurch gekennzeichnet,**
**dass** der Netzabschnitt (14) relativ geringeren Spannungsniveaus und der Netzabschnitt (24) relativ höheren Spannungsniveaus Teil eines übergeordneten Lastreglers, Steuergeräts (30) und/oder dergleichen sind.

23. Elektronische Schutzschaltung nach einem der vorhergehenden Ansprüche,
**dadurch gekennzeichnet,**
**dass** das bei unterschiedlichen Gleichspannungsniveaus betriebene Netz durch ein Mehrspannungs-Bordnetz und insbesondere durch ein Zweispannungs-Bordnetz eines Fahrzeugs, insbesondere Kraftfahrzeugs, gebildet ist.

24. Elektronische Schutzschaltung nach einem der vorhergehenden Ansprüche,
**dadurch gekennzeichnet,**
**dass** das bei unterschiedlichen Gleichspannungsniveaus betriebene Netz durch ein 14V/42V-Bordnetz gebildet ist.

## Claims

1. Electronic safety circuit (10) for a network (12) comprising several electrical and/or electronic components and operated at different d.c. voltage levels, at least one network section (14) of relatively lower voltage level being assigned a MOSFET safety switch (32) which is connected to the output of a voltage supply input (34) of the network section (14) concerned and comprises a MOSFET (36) with internal inverse diode (38) which operates in reverse mode and which, if an overvoltage arises in a subsequent part of the network section (14) concerned, for example due to a short circuit with a network section (24) of relatively higher voltage level, can be switched off automatically in order to protect the voltage supply input of the network section (14) of relatively lower voltage level against overvoltage, **characterised in that**, when the MOSFET (36) is switched off, voltage is further supplied to the network section (14) concerned of relatively lower voltage level via the voltage supply input (34) and the internal inverse diode (38) of the MOSFET (36), while the voltage supply input (34) is protected against a respective overvoltage by the same inverse diode (38).

2. Electronic safety circuit according to claim 1, **characterised in that** an n-channel MOSFET is provided as the MOSFET (36).

3. Electronic safety circuit according to claim 1 or 2, **characterised in that** an enhancement MOSFET is provided as the MOSFET (36).

4. Electronic safety circuit according to any of the preceding claims, **characterised in that** the MOSFET (36) can be switched off via an overvoltage sensor (58).

5. Electronic safety circuit according to any of the preceding claims, **characterised in that** the MOSFET (36) can be controlled via a driver (60) so as to be switched on if there is no overvoltage.

6. Electronic safety circuit according to claims 4 and 5, **characterised in that** the driver (60) can be controlled via the overvoltage sensor (58) so that the MOSFET (36) is switched off if an overvoltage occurs.

7. Electronic safety circuit according to claim 5 or 6, **characterised in that** the driver (60) is supplied with a voltage derived from a network section (24) of relatively higher voltage level.

8. Electronic safety circuit according to claim 7, **characterised in that** the driver (60) is supplied with a voltage occurring at a voltage supply input (52) of the network section (24) of relatively higher voltage level.

9. Electronic safety circuit according to any of the preceding claims, **characterised in that** the network section (14) of relatively lower voltage level is assigned an overvoltage arrester (74).

10. Electronic safety circuit according to claim 9, **characterised in that** the overvoltage arrester (74) is connected to the output of the MOSFET safety switch (32).

11. Electronic safety circuit according to any of the preceding claims, **characterised in that** the MOSFET safety switch (32) is arranged in the region of the voltage supply input (34) of the network section (14) of relatively lower voltage level.

12. Electronic safety circuit according to any of the preceding claims, **characterised in that** the MOSFET safety switch (32) is connected between the voltage supply input (40) and an internal voltage supply rail of the network section (14) of relatively lower voltage level.

13. Electronic safety circuit according to claim 12, **characterised in that** the overvoltage arrester (74) is connected to the internal voltage supply rail (40).

14. Electronic safety circuit according to any of the preceding claims, **characterised in that** via the network section (14) of relatively lower voltage level at least one load (20) is supplied with electricity.

15. Electronic safety circuit according to claim 14, **characterised in that** between the MOSFET safety switch (32) and a respective load (20) assigned to the network section of relatively lower voltage level is connected at least one make-and-break switch (42).

16. Electronic safety circuit according to claim 15, **characterised in that** the make-and-break switch (42) comprises a MOSFET (76) with internal inverse diode.

17. Electronic safety circuit according to claim 15 or 16, **characterised in that** the make-and-break switch (42) can be controlled via a load regulator, a control device (44) and/or the like.

18. Electronic safety circuit according to any of the preceding claims, **characterised in that** at least one load (22) is supplied with electricity via the network section (24) of relatively higher voltage level.

19. Electronic safety circuit according to claim 18, **characterised in that** at least one make-and-break switch (46) is connected to the input of a respective load (22) assigned to the network section (24) of relatively higher voltage level.

20. Electronic safety circuit according to claim 19, **characterised in that** the make-and-break switch (46) comprises a MOSFET (78) with internal inverse diode.

21. Electronic safety circuit according to claim 19 or 20, **characterised in that** the make-and-break switch (46) can be controlled via a load regulator, a control device (48) and/or the like.

22. Electronic safety circuit according to any of the preceding claims, **characterised in that** the network section (14) of relatively lower voltage level and the network section (24) of relatively higher voltage level form part of an overriding load regulator, control device (30) and/or the like.

23. Electronic safety circuit according to any of the preceding claims, **characterised in that** the network which is operated at different d.c. voltage levels is formed by a multiple-voltage electrical system and in particular by a dual-voltage electrical system of a vehicle, in particular motor vehicle.

24. Electronic safety circuit according to any of the preceding claims, **characterised in that** the network which is operated at different d.c. voltage levels is formed by a 14V/42V electrical system of a vehicle.

## Revendications

1. Circuit électronique de protection (10) pour un réseau (12) comprenant plusieurs composants électriques et/ou électroniques et fonctionnant à des niveaux différents de tension continue, dans lequel un commutateur de protection (32) de type MOSFET est associé à au moins une portion de réseau (14) présentant un niveau de tension plus faible, lequel est monté à la suite d'une entrée d'alimentation (34) en tension de la portion de réseau (14) concernée et comprend un transistor MOSFET (36) fonctionnant en mode de fonctionnement inverse avec une diode d'inversion interne (38) qui, lors de l'apparition d'une surtension dans une partie successive de la portion de réseau (14) concernée, par exemple en raison d'un court-circuit avec une portion de réseau (24) présentant un niveau de tension relativement plus élevée, peut être automatiquement coupé, afin de protéger l'entrée d'alimentation en tension de la portion de réseau (14) présentant le niveau de tension plus faible par rapport à la surtension,
**caractérisé en ce que**
lorsque le transistor MOSFET (36) est coupé, une alimentation en tension de la portion de réseau (14) concernée avec un niveau de tension plus faible continue à avoir lieu via l'entrée d'alimentation en tension (34) et la diode d'inversion interne (38) du transistor MOSFET (36), tandis que l'entrée d'alimentation en tension (34) est protégée à l'encontre d'une surtension respective via la même diode d'inversion (18).

2. Circuit électronique de protection selon la revendication 1, **caractérisé en ce qu'**il est prévu un transistor MOSFET à n canaux à titre de transistor MOSFET (36).

3. Circuit électronique de protection selon la revendication 1 ou 2, **caractérisé en ce qu'**il est prévu à un transistor MOSFET autobloquant à titre de transistor MOSFET (36).

4. Circuit électronique de protection selon l'une des revendications précédentes, **caractérisé en ce que** le transistor MOSFET (36) est susceptible d'être coupé via un détecteur de surtension (58).

5. Circuit électronique de protection selon l'une des revendications précédentes, **caractérisé en ce que** le transistor MOSFET (36) est susceptible d'être piloté au moyen d'un circuit pilote (60) de telle manière qu'il est passant en l'absence de surtension.

6. Circuit électronique de protection selon les revendications 4 et 5, **caractérisé en ce que** le circuit pilote (60) peut être piloté au moyen du capteur de surtension (58) de telle manière que le transistor MOSFET (36) est coupé lors de l'apparition d'une surtension.

7. Circuit électronique de protection selon les revendications 5 ou 6, **caractérisé en ce que** le circuit pilote (60) est alimenté par une tension dérivée depuis une portion de réseau (24) présentant un niveau de tension relativement plus élevé.

8. Circuit électronique de protection selon la revendication 7, **caractérisé en ce que** le circuit pilote (60) est alimenté par une tension appliquée à une entrée d'alimentation en tension (52) de la portion de réseau (24) présentant un niveau de tension relativement plus élevé.

9. Circuit électronique de protection selon l'une des revendications précédentes, **caractérisé en ce qu'**une ligne de dérivation de surtension (74) est associée à la portion de réseau (14) présentant un niveau de tension relativement plus faible.

10. Circuit électronique de protection selon la revendication 9, **caractérisé en ce que** la ligne de dérivation de surtension (74) est branchée à la suite du commutateur de protection (32) de type MOSFET.

11. Circuit électronique de protection selon l'une des revendications précédentes, **caractérisé en ce que** le commutateur de protection (32) de type MOSFET est agencé dans la zone de l'entrée d'alimentation en tension (34) de la portion de réseau (14) présentant un niveau de tension relativement plus faible.

12. Circuit électronique de protection selon l'une des revendications précédentes, **caractérisé en ce que** le commutateur de protection (32) de type MOSFET est branché entre l'entrée d'alimentation en tension (40) et un rail d'alimentation en tension interne de la portion de réseau (14) présentant un niveau de tension relativement plus faible.

13. Circuit électronique de protection selon la revendication 12, **caractérisé en ce que** la ligne de dérivation de surtension (74) est branchée au rail d'alimentation en tension interne (40).

14. Circuit électronique de protection selon l'une des revendications précédentes, **caractérisé en ce qu'**au moins une charge (20) est alimentée en énergie électrique via la portion de réseau (14) présentant un niveau de tension relativement plus faible.

15. Circuit électronique de protection selon la revendication 14, **caractérisé en ce qu'**au moins un commutateur de coupure en charge (42) est branché entre le commutateur de protection (32) de type MOSFET et une charge respective (20) associée à la portion de réseau présentant un niveau de tension relativement plus faible.

16. Circuit électronique de protection selon la revendication 15, **caractérisé en ce que** le commutateur de coupure en charge (42) comprend un transistor MOSFET (76) avec diode d'inversion interne.

17. Circuit électronique de protection selon la revendication 15 ou 16, **caractérisé en ce que** le commutateur de coupure en charge (42) est susceptible d'être piloté via un régulateur de charge, un dispositif de commande (44) et/ou similaire.

18. Circuit électronique de protection selon l'une des revendications précédentes, **caractérisé en ce qu'**au moins une charge (22) est alimentée en énergie électrique via la portion de réseau (24) présentant le niveau de tension relativement plus élevé.

19. Circuit électronique de protection selon la revendication 18, **caractérisé en ce qu'**au moins un commutateur de coupure en charge (46) est branché avant la charge respective (22) associée à la portion de réseau (24) présentant le niveau de tension relativement plus élevé.

20. Circuit électronique de protection selon la revendication 19, **caractérisé en ce que** le commutateur de coupure en charge (46) comprend un transistor MOSFET (78) avec diode d'inversion interne.

21. Circuit électronique de protection selon la revendication 19 ou 20, **caractérisé en ce que** le commutateur de coupure en charge (46) est susceptible d'être piloté via un régulateur de charge, un dispositif de commande (48) et/ou similaire.

22. Circuit électronique de protection selon l'une des revendications précédentes, **caractérisé en ce que** la portion de réseau (14) présentant le niveau de tension plus faible et la portion de réseau (24) présentant le niveau de tension relativement plus élevé font partie d'un régulateur de charge, d'un dispositif de commande (30) et/ou d'un dispositif similaire maître.

23. Circuit électronique de protection selon l'une des revendications précédentes, **caractérisé en ce que** le réseau fonctionnant avec différents niveaux de tension continue est formé par un réseau de bord à tensions multiples et en particulier par un réseau de bord d'un véhicule à deux tensions, en particulier d'un véhicule automobile.

24. Circuit électronique de protection selon l'une des revendications précédentes, **caractérisé en ce que** le réseau fonctionnant avec différents niveaux de tension continue est formé par un réseau de bord à 14 V/42 V.
